# EUROPÄISCHE PATENTSCHRIFT

(11) **EP 2 982 529 B1**
(45) Veröffentlichungstag und Bekanntmachung des Hinweises auf die Patenterteilung: **04.10.2017**
(21) Anmeldenummer: 15000917.3
(22) Anmeldetag: 30.03.2015
(51) Int. Cl.: B60G 11/28, B60G 11/27

(54) **LUFTFEDERTRÄGER FÜR EINE LUFTGEFEDERTE ACHSE EINES NUTZFAHRZEUGS**
PNEUMATIC SUPPORT FOR A PNEUMATICALLY SUPPORTED AXLE OF A COMMERCIAL VEHICLE
SUPPORT DE SUSPENSION PNEUMATIQUE POUR UN ESSIEU À SUSPENSION PNEUMATIQUE D'UN VÉHICULE UTILITAIRE

(30) Priorität: 09.08.2014 DE 102014011803
(43) Veröffentlichungstag der Anmeldung: 10.02.2016
(73) Patentinhaber: MAN Truck & Bus AG, 80995 München (DE)
(72) Erfinder: Schmidt, Sebastian, 06712 Zeitz (DE); Hintereder, Jürgen, 80997 München (DE)
(74) Vertreter: v. Bezold & Partner Patentanwälte - PartG mbB

(56) Entgegenhaltungen:
- CN-B- 101 885 296
- CN-U- 203 126 438
- CN-U- 203 752 815
- CN-Y- 201 272 216
- DE-A1- 10 034 751
- DE-A1-102005 060 063
- DE-U1- 29 719 235
- DE-U1-202004 007 889
- JP-U- H0 371 907
- KR-B1- 100 644 464
- US-B1- 6 302 418

## Beschreibung

Die Erfindung betrifft einen Luftfederträger für eine luftgefederte Achse eines Nutzfahrzeugs, insbesondere eines Omnibusses.

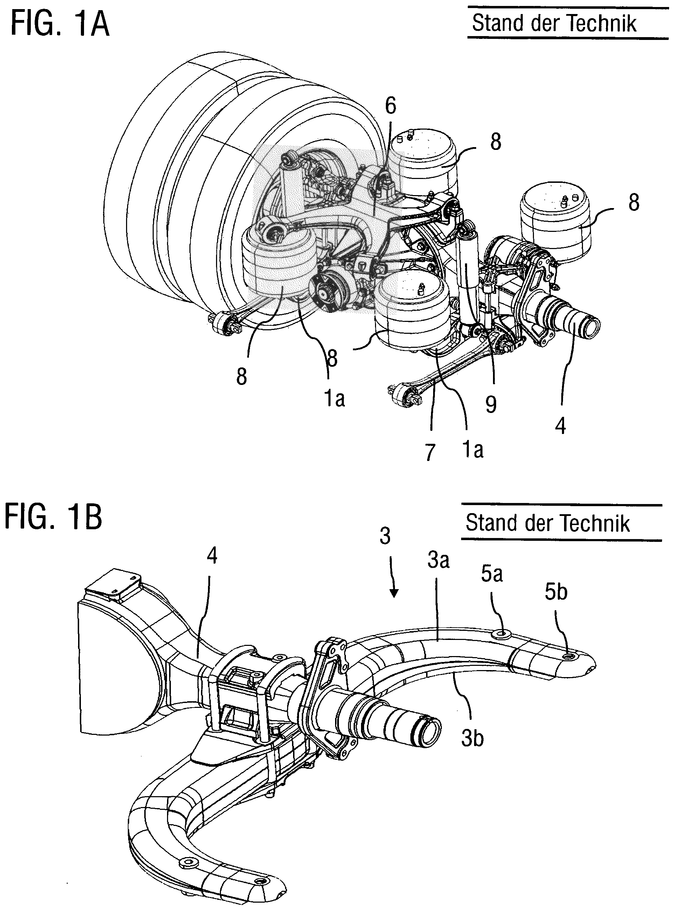

In herkömmlicher Weise wird der Luftfederträger an der Unterseite des Achskörpers einer Starrachse angeordnet, was beispielhaft in Figur 1A dargestellt ist. Ein Luftfederträger 1a stellt über die Luftfedern 8 und gegebenenfalls Dämpfungselemente 9 eine Verbindung zwischen der Starrachse 4 eines Nutzfahrzeugs und dem Fahrzeugrahmen (nicht dargestellt) her. Die in Figur 1A gezeigte Starrachse 4 befindet sich beispielsweise am Heck des Fahrzeugs unter dem Rahmen. Ihre Position in x- und y-Richtung wird durch die Längslenker 7 und den X-Lenker (Vierpunktlenker) 6 bestimmt. Den Abstand zwischen Rahmen und der Achse 4 bestimmen die Luftfedern 8. Da sie vor und hinter der Achse stehen, werden sie durch den Luftfederträger 1a verbunden. Neben der reinen Verbindung und Krafteinleitung erfüllt der Luftfederträger 1a weitere Aufgaben, beispielsweise die Anbindung der Stoßdämpfer.

Im Nutzfahrzeugbereich sind lineare und U-förmige Ausführungen der Luftfederträger bekannt. Bei Omnibussen werden üblicherweise U-förmige Luftfederträger eingesetzt. U-förmige Luftfederträger kommen bei Personenbeförderungsfahrzeugen wie Kraftomnibussen, besonders in Kombination mit der Niederflurbauweise, zum Einsatz. Die Luftfedern befinden sich vor und hinter den Reifen. Die U-Form des Luftfederträgers erlaubt das "Umgreifen" der Räder, so dass der größere Abstand zum Wankzentrum das Wanken reduziert und damit den Fahrkomfort deutlich erhöht.

Die Lage der Luftfedern ermöglicht es, den Rahmen abzusenken und damit das Niveau des Bodens im Fahrzeug ohne Stufen zu betreten. Der Grund für die aufwändigere Form gegenüber der des LKWs liegt auch in der Rahmenstruktur von Omnibussen. Die tragenden Strukturen von Omnibussen befinden sich auch im Gitterrahmen der Außenwände. Der Luftfederträger soll die Kräfte des Fahrwerks möglichst direkt in diese Tragstrukturen einbringen. Am Luftfederträger sind seitlich zur Fahrzeugmitte Anschlüsse für den Längslenker integriert. Der Längslenker nimmt Kräfte der Achse in Fahrzeuglängsrichtung auf und leitet diese in die Rahmenstruktur.

Die Figur 1B zeigt einen aus dem Stand der Technik bekannten U-förmigen Luftfederträger 3, der auch in der DE 20 2004 007 889 U1 beschrieben ist. Der Luftfederträger 3 umfasst einen Trägerkörper, der als Hohlkörper ausgebildet ist und der aus zwei im Wesentlichen symmetrischen Halbschalen 3a, 3b, die in einer mittleren, horizontalen Symmetrieebene des Hohlkörpers angeordnet sind, zusammengeschweißt sind.

Als nachteilig an diesem Luftfederträger 3 haben sich die vergleichsweise hohen Bauteilkosten erwiesen. Ferner können zusätzlich eingeschweißte Winkel aufgrund einer variablen Schweißnahtgüte zu einer Streuung in der Beanspruchbarkeit führen, was insbesondere bei Fahrzeugen mit harten Einsatzprofilen nachteilig ist. Ferner sind zur Fertigung der Halbschalen 3a, 3b aufwändige Werkzeuge und für die prozesssichere Fertigung ein hoher Aufwand erforderlich.

Die US 6 302 418 B1 offenbart einen Federträger mit modularen Endstücken. Die Endstücke sind entsprechend zu gewünschten Befestigungsstellen für Federelemente ausgeführt. Dadurch kann ein einziges Zentralteil hergestellt werden mit Endstücken, die jeweils individuell an das jeweilige Fahrzeug angepasst sind. Aus der DE 10 2005 060 063 A1, die als nächstliegender Stand der Technik angesehen wird, ist ein Träger für ein Fahrzeug bekannt, aufweisend ein erstes Trägerteil, ein zweites Trägerteil und ein Montageteil. Ein Endabschnitt des ersten Trägerteils ist in Form eines Bogens gebogen, und ein Endabschnitt des zweiten Trägerteils ist in Form eines Bogens gebogen. Das eine Ende des ersten Trägerteils ist an einem Ende des Montageteils angeordnet, das andere Ende des zweiten Trägerteils ist an dem anderen Ende des Montageteils angeordnet, und eine Hinterachse ist an dem Montageteil montiert.

Die Dokumente CN203126438 U, CN201272216 Y, DE10034751 A1, DE29719235 U1, KR100644464 B1, CN203752815 U offenbaren andere Luftfederträger.

Es ist somit eine Aufgabe der Erfindung, einen verbesserten Luftfederträger für eine luftgefederte Achse eines Nutzfahrzeugs bereitzustellen, mit dem Nachteile herkömmlicher Luftfederträger vermieden werden können. Die Aufgabe der Erfindung ist es insbesondere, einen Luftfederträger bereitzustellen, der mit einem prozesssicheren Fertigungsverfahren und kostensparend hergestellt werden kann.

Diese Aufgaben werden durch einen Luftfederträger mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert. Gemäß allgemeinen Gesichtspunkten der Erfindung werden die genannten Aufgaben durch einen Luftfederträger für eine luftgefederte Achse eines Nutzfahrzeugs gelöst, umfassend ein Mittelteil und zwei Arme, die auf gegenüberliegenden Seiten des Mittelteils jeweils fest, insbesondere drehfest, am Mittelteil angefügt sind. Das Mittelteil weist eine erste Befestigungseinrichtung zur achsseitigen Anbindung des Luftfederträgers und eine zweite Befestigungseinrichtung zur Anbindung eines Längslenkers auf. Jeder der Arme weist eine dritte Befestigungseinrichtung zur Halterung einer Luftfeder auf.

Ein besonderer Vorzug des erfindungsgemäßen mehrteiligen Aufbaus des Luftfederträgers liegt darin, dass das Mittelteil und die Arme jeweils im Hinblick auf ihre unterschiedlichen Funktionen und aufzunehmenden Belastungen optimal gestaltet und gefertigt werden können. Der mehrteilige Aufbau ermöglicht insbesondere die Verwendung von Halbzeugen für die Arme bzw. für Teilabschnitte der Arme. Der modulare Aufbau aus Mittelteil und Armen ermöglicht ferner eine kostensparende Anpassung an unterschiedliche Einbausituationen bei verschiedenen Fahrzeugmodellen, da je nach Anforderung beispielsweise nur das Mittelteil oder nur die Arme, z. B. deren Abmessungen, angepasst werden müssen.

Ferner können die aus dem Achseinbau resultierenden konstruktiven Zwänge durch zentrale mechanische Bearbeitung eines vergleichsweise kompakten Mittelteils zur Achsanbindung und zur Längslenkeranbindung gelöst werden, während die Lenker als vergleichsweise einfache Bauteile kostensparend hergestellt werden können.

Das Mittelteil kann beispielsweise als Guss- oder Schmiedeteil ausgeführt sein.

Ferner kann das Mittelteil einen Grundkörper mit polygonalem Querschnitt aufweisen, wobei an dem Grundkörper die erste Befestigungseinrichtung und die zweite Befestigungseinrichtung angeordnet sind und vorteilhafterweise auf planen Oberflächen des Grundkörpers angeformt sind.

Ferner kann das Mittelteil zwei äußere, sich in Richtung der Arme verjüngende Bereiche aufweisen, an denen die Arme angefügt sind und die ausgeführt sind, den polygonalen Querschnitt des Grundkörpers des Mittelteils an einen runden Querschnitt der Arme anzupassen. Die verjüngenden Bereiche zur Anpassung an den Armquerschnitt ermöglichen eine gute und gleichmäßige Verteilung der auf den Luftfederträger wirkenden Beanspruchungskräfte.

Gemäß einem weiteren Aspekt der Erfindung kann das Mittelteil für jeden der Arme eine an den Armquerschnitt formangepasste Kontaktfläche aufweisen, an der das Mittelteil mit dem Arm vollflächig verschweißt ist. Die Kontaktfläche ist hierzu vorzugsweise plan gefräst. Dadurch kann eine besonders feste und stabile Verbindung der Arme mit dem Mittelteil hergestellt werden.

Das Mittelteil kann im Bereich des Anschlusses an die Arme im Falle der Urformung des Mittelteils aus Guss optional zusammenhängende Hohlräume enthalten, in der Gestalt, dass im Bereich der Verbindung beider Bauteile vergleichbare Steifigkeiten und oder Anschlussmassen vorliegen, so dass die lokalen Beanspruchungen stark reduziert werden können. Im Falle der Urformung des Mittelteils durch Schmieden können im Mitteilteil hierzu Eindrückungen vorhanden sein, die den gleichen Zweck verfolgen.

Bei einer vorteilhaften Variante dieser Ausgestaltungsform sind die Arme am Mittelteil durch Reibschweißen oder Magnet-Arc-Schweißen befestigt, die jeweils sehr prozesssichere Fügetechnologien darstellen. Das Gesamtbauteil erhält dadurch eine geringere Streuung in der Beanspruchbarkeit. Alternativ kann auch eine Verbindung durch Kleben hergestellt werden.

Bei einer weiteren vorteilhaften Variante dieser Ausgestaltungsform können das Mittelteil und/oder die Arme aus einem Aluminium-, Graphit- oder Graphitverbundwerkstoff gebildet sein. Der Begriff Aluminiumverbundwerkstoff soll auch Aluminiumlegierungen umfassen. Für die vollflächige Verbindung des Mittelteils mit den Armen durch beispielsweise Reibschweißen oder Magnet-Arc-Schweißen besteht somit die Möglichkeit, neben Stahl und Gusseisen noch andere metallische Werkstoffe wie Aluminium oder eben Graphit-basierte Werkstoffe, z. B. Kugelgraphit, zu verwenden, wodurch ein erhebliches Gewichtseinsparungspotential realisiert werden kann.

Gemäß einer besonders bevorzugten Ausführungsform weist die erste Befestigungseinrichtung zur Abstützung der Achse zwei zueinander höhenversetzte, schräge Stützflächen auf. Die zwei zueinander höhenversetzten, schrägen Stützflächen können durch zwei unterschiedlich hohe Stege gebildet sein. Die Stützflächen sind vorzugsweise in einer Richtung, die im an der Achse montierten Zustand des Luftfederträgers der Längsachse des Fahrzeugs entspricht, versetzt angeordnet, d. h. in Richtung der Längsachse der Armabschnitte, die am Mittelteil angefügt sind.

Diese Ausführungsvariante bietet den besonderen Vorzug, dass dadurch eine Berücksichtigung der Einbaulage der Achse, die oftmals etwas gegenüber der Fahrzeugquerachse gedreht eingebaut ist, ermöglicht wird.

Die Stützflächen sind somit vorzugsweise planparallel zu einer korrespondierenden Verbindungsfläche der Achse, auf denen der Luftträger im montierten Zustand mit den Stützflächen aufliegt, ausgeführt.

Vorzugsweise bilden die schrägen Stützflächen zu einer horizontalen Ebene des Luftfederträgers, die beispielsweise von den Armen aufgespannt wird, einen Winkel, der im Bereich von 2° bis 5° liegt, so dass typische Verdrehungen der Fahrzeugachse gegenüber der Fahrzeugquerachse, die im Bereich von 2° bis 5° liegen, kompensiert werden können.

Die erste Befestigungseinrichtung umfasst ferner Durchgangsbohrungen, wobei im Bereich jeder der Stützflächen jeweils zwei Durchgangsbohrungen in Vertikalrichtung in das Mittelteil eingebracht sind und über die der Luftfederträger mit der Achse verschraubt werden kann. Ferner ist der Luftfederträger gestreckt U-förmig ausgebildet, wobei die Arme jeweils einen rohrförmigen, am Mittelteil angefügten ersten Abschnitt aufweisen, der sich im an der Achse montierten Zustand des Luftfederträgers im Wesentlichen in Längsrichtung des Fahrzeugs erstreckt, sowie einen sich an den ersten Abschnitt anschließenden zweiten Abschnitt aufweisen, der sich im an der Achse montierten Zustand des Luftfederträgers im Wesentlichen in Querrichtung des Fahrzeugs erstreckt. Dies ist besonders für Omnibusse vorteilhaft. Erfindungsgemäß ist der zweite Abschnitt als Blechbiegeteil ausgeführt, das einen Rohrendabschnitt des rohrförmigen ersten Abschnitts mittels eines Endabschnitts des Blechbiegeteils umgreift, welcher hierzu zwei an einen Durchmesser des Rohrendabschnitts angepasste kreisförmige Ausnehmungen aufweist und entlang der kreisförmigen Ausnehmungen mit dem Rohrendabschnitt verschweißt ist.

Diese im Wesentlichen zweiteilige Ausführung der Lenkerarme ermöglicht die kostengünstige Verwendung von Halbzeugen, z. B. für die rohrförmigen ersten Abschnitte der Lenkerarme.

Eine weitere Variante dieser Ausgestaltungsform sieht vor, dass das Blechbiegeteil ein nach oben hin offenes, aus zwei parallel verlaufenden Kanten gebildetes Profil aufweist. Ferner kann das Blechbiegeteil einen aus zwei geraden Teilabschnitten gebildeten, geknickten Verlauf aufweisen, derart, dass der Verbindungsbereich der beiden Teilabschnitte weiter außen als der Rohrendabschnitt des vorgenannten ersten Abschnitts liegt.

Hierbei kann die dritte Befestigungseinrichtung zur Halterung der Luftfeder vorteilhafterweise am Verbindungsbereich der beiden Teilabschnitte angeordnet sein. Dadurch kann die Länge des ersten Abschnitts der Lenkerarme verkürzt und somit Material eingespart werden, ohne den Abstand der beiden auf den Luftfederträger montierten Luftfedern verringern zu müssen.

Zur Ausbildung der dritten Befestigungseinrichtung kann eine Buchse zum Verschrauben der Luftfedern in einen mittleren Bereich, vorzugsweise in den vorgenannten Verbindungsbereich, in das Blechbiegeteil eingearbeitet sein.

Ferner kann zur Befestigung eines Dämpfers an einem Endabschnitt eines Blechbiegeteils eine Stützfläche mit einer Durchgangsbohrung vorgesehen sein. Vorteilhafterweise ist das Blechbiegeteil zu seinem nicht am ersten Abschnitt befestigten Ende hin verjüngt ausgebildet, d. h. an demjenigen Ende, an dem der Dämpfer angeordnet werden kann. Dadurch kann der Bauraumbedarf weiter verkleinert werden.

Eine weitere Möglichkeit einer nicht erfindungsgemäßen Realisierung eines gestreckt U-förmig ausgebildeten Luftfederträgers sieht vor, dass der erste Abschnitt und der zweite Abschnitt der Arme miteinander einteilig ausgeführt sind. Gemäß dieser Variante sind die beiden Abschnitte der Arme vorzugsweise rohrförmig ausgebildet. Ferner kann gemäß dieser Variante das Mittelteil beispielsweise als Stahlgussteil oder als Schmiedeteil ausgeführt sein, und die Arme können zur Gewichtsreduzierung aus einer Aluminiumlegierung gefertigt sein, die beispielsweise durch ein Reibschweißverfahren mit dem Mittelteil verbunden sind. Gemäß dieser nicht erfindungsgemäßen Realisierung kann zur Ausbildung der dritten Befestigungsvorrichtung in jeden der einteilig ausgeführten Arme jeweils eine Buchse in einem Übergangsbereich vom ersten zum zweiten Abschnitt in den Arm eingearbeitet sein, um den Abstand der montierten Luftfedern zueinander zu maximieren. Ferner kann zur Befestigung eines Dämpfers ein Endbereich der Arme eine Abflachung und ein sich daran anschließendes planes Blechteil mit einer Durchgangsbohrung aufweisen.

Gemäß einem weiteren Ausführungsbeispiel kann das Mittelteil zur Reduzierung des Gewichts des Mittelteils eine Eindrückung oder Ausnehmung aufweisen, so dass der Grundkörper des Mittelteils, d. h. das Mittelteil ohne die ersten und zweiten Befestigungseinrichtungen, im Querschnitt ein I-Profil aufweist. Vorzugsweise ist die Ausnehmung bzw. Eindrückung an einer Seite des Mittelteils vorgesehen, die im an der Achse montierten Zustand des Luftfederträgers einer Fahrzeuginnenseite zugewandt ist.

Ein weiterer Aspekt der Erfindung betrifft ein Nutzfahrzeug, vorzugsweise Omnibus, mit einem Luftfederträger wie hierin offenbart. Die Erfindung betrifft ferner ein Nutzfahrzeug mit einem an einer Starrachse des Nutzfahrzeugs befestigten Luftfederträger, wie hierin offenbart, wobei die Starrachse des Nutzfahrzeugs gegenüber einer Querachse des Fahrzeugs in einem Winkel, der im Bereich von 2° bis 5° liegt, gedreht eingebaut ist und wobei die beiden zueinander höhenversetzten schrägen Stützflächen so ausgebildet sind, dass sie die Verdrehstellung der Achse kompensieren, derart, dass die Arme des Luftfederträgers im montierten Zustand in einer horizontalen Ebene liegen. Hierzu ist der Winkel der schrägen Stützflächen, den diese jeweils mit einer Horizontalebene bilden, im Wesentlichen gleich groß wie der Verdrehwinkel der Achse.

Weitere Einzelheiten und Vorteile der Erfindung werden im Folgenden unter Bezug auf die beigefügten Zeichnungen beschrieben. Es zeigen:
- Figur 1A: die Anordnung von Luftfedern mittels eines Luftfederträgers an einer Starrachse;
- Figur 1B: einen aus dem Stand der Technik bekannten Luftfederträger;
- Figur 2: eine vordere Perspektivansicht eines Luftfederträgers gemäß einer ersten Ausführungsform der Erfindung;
- Figur 3: eine hintere Perspektivansicht des Luftfederträgers der Figur 2;
- Figur 4: eine Rückansicht des Luftfederträgers der Figur 2;
- Figur 5: eine Draufsicht des Luftfederträgers der Figur 2;
- Figur 6: eine Seitenansicht des Luftfederträgers der Figur 2;

- Figur 7: eine vordere Perspektivansicht eines Luftfederträgers gemäß einem nicht erfindungsgemäßen Beispiel;

- Figur 8: eine hintere Perspektivansicht des Luftfederträgers der Figur 7;
- Figur 9: eine Rückansicht des Luftfederträgers der Figur 7;
- Figur 10: eine Draufsicht des Luftfederträgers der Figur 7; und
- Figur 11: eine Seitenansicht des Luftfederträgers der Figur 7.

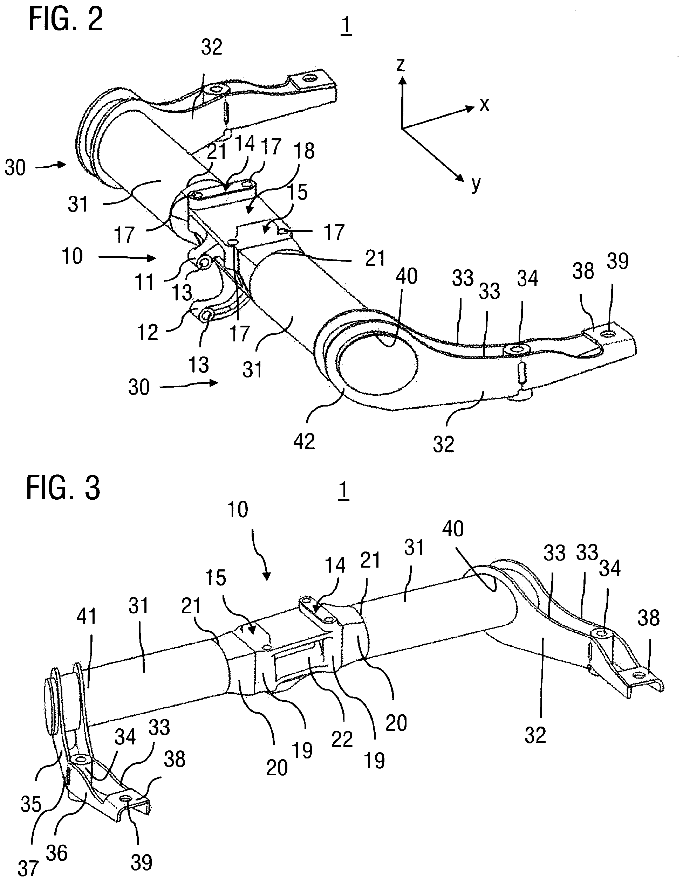

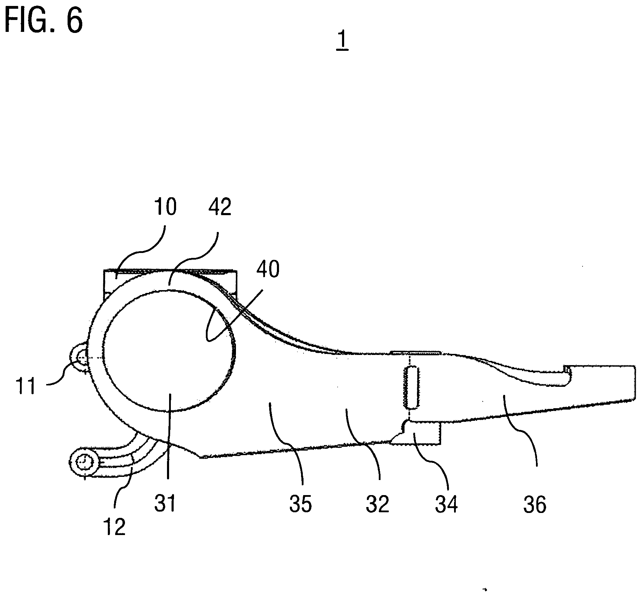

Alle Figuren 2 bis 6 zeigen ein und denselben Luftfederträger 1. Gleiche Teile sind in den Figuren mit denselben Bezugszeichen versehen, so dass die in der Zeichnung gezeigten verschiedenen Ansichten des Luftfederträgers 1 auch aus sich heraus verständlich sind.

Die Figuren 2 bis 6 zeigen eine erste Ausführungsform der Erfindung, bei der der Luftfederträger 1 für eine luftgefederte Achse eines Omnibusses gestreckt U-förmig ausgeführt ist und ein zentrales Mittelteil 10 aufweist, an dem links- und rechtsseitig jeweils ein Schenkel 30 angefügt ist. Das Mittelteil 10 ist vorliegend als Gussteil ausgeführt, kann aber auch als Schmiedeteil hergestellt werden. Die in Figur 2 dargestellten Achsen x, y bilden eine Horizontalebene, in der die Arme 30 des Luftfederträgers liegen, wobei im am Achskörper montierten Zustand des Luftfederträgers die Achse y der Längsrichtung des Fahrzeugs und die Achse x der Querrichtung des Fahrzeugs entspricht.

Das Mittelteil 10 dient zur Anbindung des Luftfederträgers 1 an die Achse, insbesondere an den Achskörper der Starrachse, und zur Anbindung an die Längslenker.

Zur Anbindung an den Achskörper weist das Mittelteil auf der dem Achskörper im montierten Zustand zugewandten Seite zwei Stützflächen 14, 15 auf, die planparallel zu entsprechenden Verbindungsflächen des Achskörpers (nicht dargestellt) ausgeführt sind und in Kontakt mit diesen Verbindungsflächen im montierten Zustand gebracht werden.

Ferner sind in das Mittelteil 10 vier Durchgangsbohrungen 17 vertikal integriert, und zwar an den Stellen gegenüberliegender Randbereiche der Stützflächen 14 und 15. Zur Anbindung an den Achskörper werden entsprechende Schrauben (nicht gezeigt) in die Durchgangsbohrungen 17 eingebracht, um den Luftfederträger 1 mit dem Achskörper zu verschrauben.

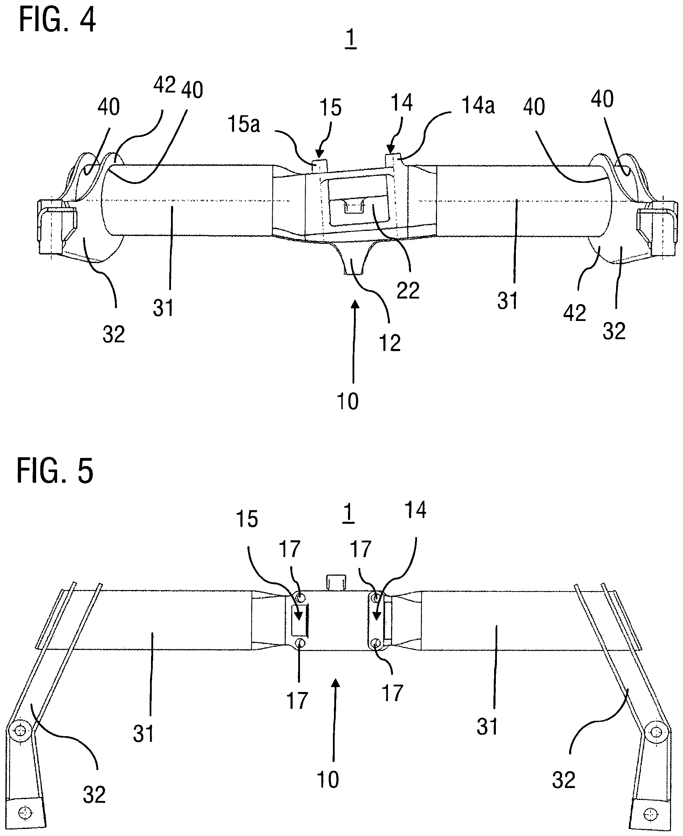

In den Figuren 2 und 4 ist erkennbar, dass zwei sich auf der Oberseite 18 des Mittelteils 10 angeordnete und in z-Richtung erstreckende Stege angeformt sind, deren Oberseite die zuvor genannten Stützflächen 14 bzw. 15 bilden. Die beiden Stege 14a und 15a sind möglicherweise unterschiedlich hoch, so dass die beiden Stützflächen 14 und 15 höhenversetzt sind. Ferner sind die beiden Stützflächen 14 und 15 schräg zu der Horizontalebene x-y und bilden im vorliegenden Ausführungsbeispiel einen Winkel 4,25° mit dieser Horizontalebene. Der Winkel 4,25° entspricht im vorliegenden Fall der gedrehten Einbaulage der Fahrzeugachse (nicht gezeigt), die gegenüber der Fahrzeugquerachse um 4,25° gedreht eingebaut ist, um die Beugewinkel der Gelenkwellen zu minimieren. Durch die höhenversetzten, schrägen Stützflächen 14, 15 kann der Luftfederträger 1 diese gedrehte Einbaulage der Fahrzeugstarrachse kompensieren, derart, dass die beiden Arme 30 und daran befestigte Luftfedern im montierten Zustand des Luftfederträgers 1 in einer Horizontalebene x-y liegen und auf diese Weise eine bessere Bauraumausnutzung ermöglicht wird.

Die Anbindung eines Längslenkers an den Luftfederträger 1 erfolgt in an sich bekannter Weise über zwei am Mittelteil befestigte und von diesem abstehende Tragarme 11, 12. Herkömmliche Längslenker weisen üblicherweise in ihren Lageraufnahmen befindliche sphärische Lager auf, in dessen Mitte ein von einem Elastomer ummanteltes, balkenförmiges Element in die Lageraufnahme eingepresst ist. Hierbei wird das balkenförmige Element über die Buchsen 13 der Tragarme 11, 12 mit dem Luftfederträger 1 verschraubt. Dieses balkenförmige Element, umgangssprachlich auch Knochen genannt, weist hierzu endseitig jeweils eine Durchgangsöffnung auf, die außerhalb des Lagers sitzt und die als Befestigungspunkt für die Anbindung an den Luftfederträger 1 dient.

Wie beispielsweise in Figur 3 gut zu erkennen ist, besteht das Mittelteil 10 aus einem Grundkörper 19 mit polygonalem Querschnitt. Auf planen Oberflächen des Grundkörpers 19 sind die Elemente zur Achsanbindung 14, 15, 17 und zur Längslenkeranbindung 11, 12 angeformt.

Auf der zu den Tragarmen 11, 12 gegenüberliegenden Seite des Grundkörpers 19 weist dieser eine Ausnehmung 22 auf zur Optimierung des Gesamtgewichts des Luftfederträgers 1.

Das Mittelteil 10 verfügt ferner über zwei äußere sich in Richtung der Arme 30 verjüngende Bereiche 20 des Mittelteils, an denen die Arme 30 angefügt sind und die ausgeführt sind, den polygonalen Querschnitt des Grundkörpers 19 des Mittelteils 10 an einen runden Querschnitt der Arme 30 anzupassen.

Die den beiden Armen 30 zugewandten Kontaktflächen 21 der äußeren Bereiche 20 sind somit kreisförmig und plan gefräst. Ein rohrförmiger Abschnitt 31, der als Halbzeug bereitgestellt wird, wird an den Kontaktflächen 21 vollflächig durch Reibschweißen oder Magnet-Arc-Schweißen mit dem Mittelteil 10 verschweißt.

Die Arme 30 verfügen neben dem rohrförmigen Abschnitt 31 ferner über ein daran befestigtes Blechbiegeteil 32.

Die Rohre 31 sind jeweils am äußeren Ende durch einen Deckel verschlossen (nicht gezeigt). Für die Aufbringung eines Korrosionsschutzes kann dieser Deckel oder aber auch das Rohr 31 an geeigneten Stellen kleinere Bohrungen (6 bis 10 mm Durchmesser) aufweisen.

Das Blechbiegeteil 32 bildet ein nach oben hin offenes, aus zwei zumindest abschnittsweise parallel verlaufenden Kanten 33 gebildetes Profil und besteht aus zwei geraden Teilabschnitten 35, 36, die einen geknickten Verlauf aufweisen können.

Hierbei ist der Verbindungsbereich 37 der beiden Teilabschnitte 35, 36 weiter außen als ein Rohrendabschnitt 41 des rohrförmigen Teils 31 der Arme. In diesem Verbindungsbereich 37 ist eine Buchse oder Hülse 34 eingebracht und mit dem Blechbiegeteil 32 verschweißt und dient als Befestigungsvorrichtung für eine Luftfeder (nicht gezeigt). Dadurch können die beiden auf dem Luftfederträger 1 befestigten Luftfedern (nicht gezeigt) weiter außen als der Endbereich 41 des rohrförmigen Abschnitts der Arme 30 positioniert werden, so dass der rohrförmige Abschnitt 31 der Arme 30 kürzer ausgeführt werden kann.

Die zwei Blechteile des Blechbiegeteils 32 weisen endseitig jeweils eine kreisförmige Ausnehmung 40 auf, die etwas größer ausgeführt ist als der Durchmesser des rohrförmigen Abschnitts 31 der Arme, so dass das Blechbiegeteil 32 mit leichter Schrägstellung zum Rohr positioniert werden kann. Entlang der kreisförmigen Ausnehmung 40 wird dann das Blechbiegeteil 32 mit dem rohrförmigen Abschnitt 31 der Arme verschweißt. Die Blechbiegeteile 32 weisen an ihrem vom Mittelteil 10 abgewandten Ende eine Stützfläche 38 auf, in die eine Durchgangsbohrung 39 eingebracht ist. Die Durchgangsbohrung 39 dient zur Befestigung eines Dämpferelements (nicht gezeigt).

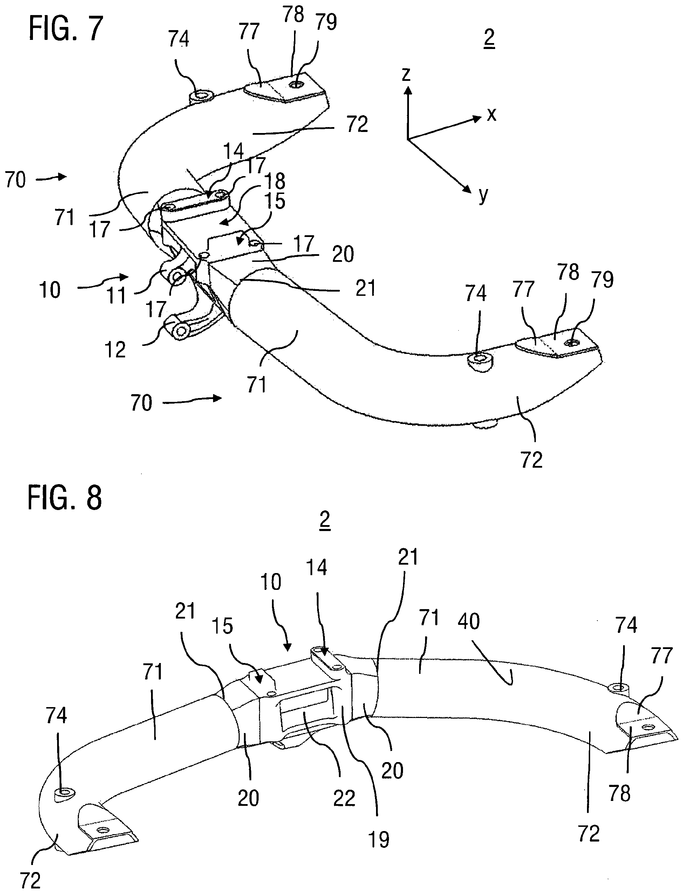

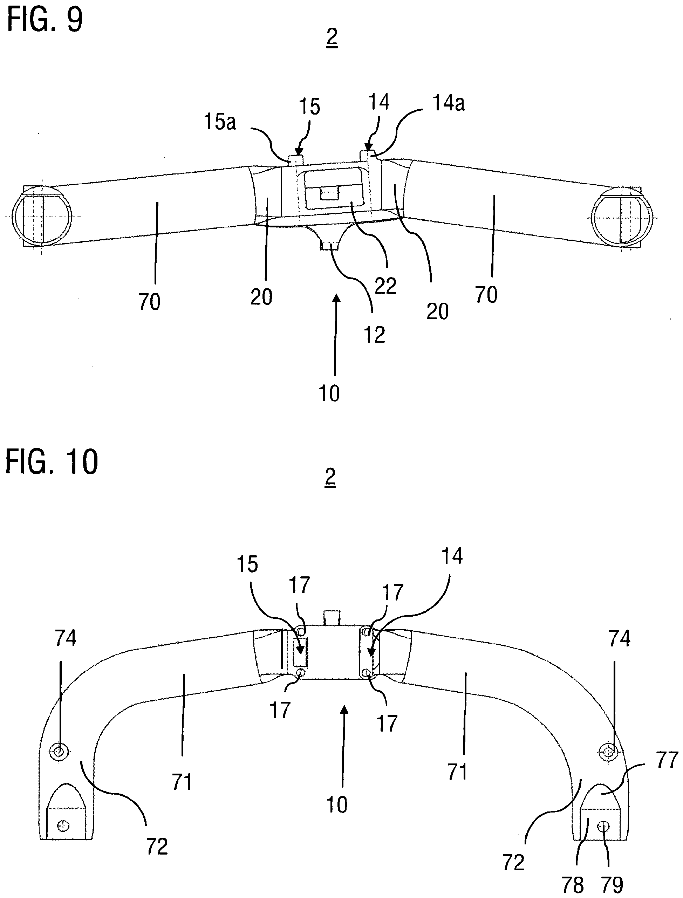

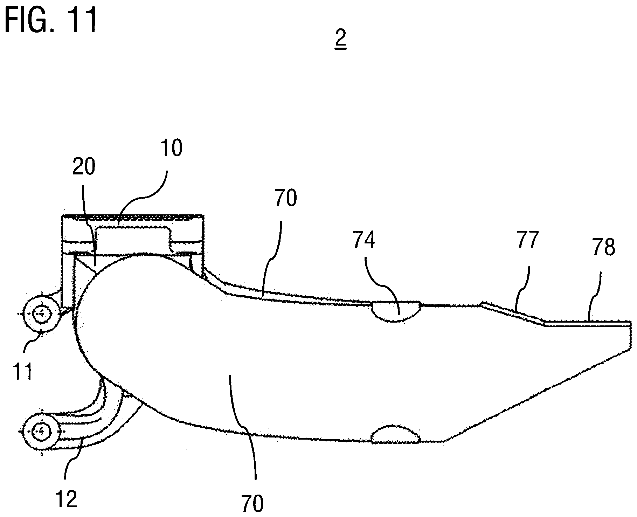

Die Figuren 7 bis 11 zeigen verschiedene Ansichten eines nicht erfindungsgemäßen Beispiels, wobei gleiche Teile in den Figuren mit denselben Bezugszeichen versehen sind, so dass die in der Zeichnung gezeigten verschiedenen Ansichten des Luftfederträgers 2 gemäß diesem Beispiel aus sich heraus verständlich sind. Das Mittelteil 10 des Luftfederträgers 2 gemäß dem Beispiel entspricht dem Mittelteil 10 der ersten Ausführungsform, so dass zur Vermeidung von Wiederholungen auf die vorherigen Ausführungen verwiesen wird. Das Mittelteil 10 ist wiederum über zwei Kontaktflächen 21 vollflächig mit den Armen 70 verschweißt.

Der Luftfederträger 2 ist wiederum gestreckt U-förmig ausgeführt, wobei die Arme 70 wiederum jeweils aus einem ersten Abschnitt 71, der sich im montierten Zustand in Längsrichtung des Fahrzeugs erstreckt, und aus einem zweiten Abschnitt 72, der sich in Fahrzeugquerrichtung erstreckt, gebildet sind.

Eine Besonderheit des Beispiels liegt darin, dass der erste Abschnitt 71 und der zweite Abschnitt 72 der Arme miteinander einteilig ausgeführt sind. Die Arme 70 können somit als rohrförmige Halbzeuge vorgefertigt werden, die in einer Biegemaschine in die vorbestimmte gekrümmte Form gebracht und anschließend noch final bearbeitet werden. In jeden der rohrförmigen Arme 70 wird im Verbindungsbereich zwischen den beiden Armabschnitten 71, 72 wiederum eine Buchse 74 eingebracht. Hierzu wird eine Bohrung in die Arme 70 eingearbeitet und dann die Buchse in der Bohrung mit dem Arm 70 verschweißt.

Jeder Arm 70 weist in seinem vom Mittelteil 10 abgewandten Endbereich eine Abflachung 77 auf, an die sich ein planes Blechteil 78 anschließt. In das Blechteil 78 ist wiederum eine Durchgangsbohrung 79 eingebracht, die zur Befestigung eines Dämpfers (wiederum nicht gezeigt) verwendet werden kann.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern die Erfindung soll alle Ausführungsbeispiele umfassen, die in den Bereich der beigefügten Patentansprüche fallen.

### Bezugszeichenliste

- 1,2: Luftfederträger
- 1a, 3: Luftfederträger aus dem Stand der Technik
- 3a, 3b: Halbschalen des bekannten Luftfederträgers
- 4: Achskörper
- 5a: Buchse
- 5b: Durchgangsbohrung
- 6: X-Lenker
- 7: Längslenker
- 8: Luftfeder bzw. Luftfederbalg
- 9: Dämpfungselement
- 10: Mittelteil
- 11, 12: Tragarme zur Längslenkeranbindung
- 13: Buchse
- 14: Erste Stützfläche
- 15: Zweite Stützfläche
- 14a, 15b: Stege
- 17: Durchgangsbohrung
- 18: Oberseite Grundkörper
- 19: Grundkörper
- 20: Verbindungsbereich
- 21: Kontaktfläche
- 22: Ausnehmung, Eindrückung
- 30: Arm
- 31: Rohrförmiger Abschnitt des Arms
- 32: Blechbiegeteil des Arms
- 33: Kante
- 34: Buchse
- 35, 36: Teilabschnitte des Blechbiegeteils
- 37: Verbindungsbereich der Teilabschnitte
- 38: Stützfläche
- 39: Durchgangsbohrung
- 40: Ausnehmung
- 41: Rohrendabschnitt
- 70: Arm
- 71: Erster Abschnitt des Arms
- 72: Zweiter Abschnitt des Arms
- 74: Buchse
- 77: Abflachung
- 78: Blechteil
- 79: Durchgangsbohrung

## Patentansprüche

1. Luftfederträger (1; 2) für eine luftgefederte Achse (4) eines Nutzfahrzeugs, umfassend
ein Mittelteil (10), aufweisend eine erste Befestigungseinrichtung (14, 15, 17) zur achsseitigen Anbindung des Luftfederträgers (1; 2) und eine zweite Befestigungseinrichtung (11, 12, 13) zur Anbindung eines Längslenkers (7); und
zwei Arme (30; 70), die auf gegenüberliegenden Seiten des Mittelteils (10) jeweils fest am Mittelteil (10) angefügt sind und jeweils eine dritte Befestigungseinrichtung (34; 74) zur Halterung einer Luftfeder (8) aufweisen; wobei der Luftfederträger (1; 2) gestreckt U-förmig ist, wobei die Arme (30; 70) jeweils einen rohrförmigen, am Mittelteil angefügten, ersten Abschnitt (31; 71) aufweisen, der sich im an der Achse (4) montierten Zustand des Luftfederträgers im Wesentlichen in Längsrichtung (y) des Fahrzeugs erstreckt, und einen sich an den ersten Abschnitt (31; 71) anschließenden zweiten Abschnitt (32; 72) aufweisen, der sich im an der Achse (4) montierten Zustand des Luftfederträgers (1; 2) im Wesentlichen in Querrichtung (x) des Fahrzeugs erstreckt;
**dadurch gekennzeichnet, dass** der zweite Abschnitt als Blechbiegeteil (32) ausgeführt ist, das einen Rohrendabschnitt (41) des ersten Abschnitts (31) mittels eines Endabschnitts (42) des Blechbiegeteils (32) umgreift, welcher hierzu zwei an einen Durchmesser des Rohrendabschnitts (41) angepasste kreisförmige Ausnehmungen (40) aufweist und entlang der kreisförmigen Ausnehmungen (40) mit dem Rohrendabschnitt (41) verschweißt ist.

2. Luftfederträger nach Anspruch 1, **gekennzeichnet durch**
(a) einen Grundkörper (19) des Mittelteils mit polygonalem Querschnitt, an dem die erste Befestigungseinrichtung (14, 15, 17) und zweite Befestigungseinrichtung (11, 12, 13) angeordnet sind; und
(b) zwei äußere, sich in Richtung der Arme (30; 70) verjüngende Bereiche (20) des Mittelteils (10), an denen die Arme (30; 70) angefügt sind und die ausgeführt sind, den polygonalen Querschnitt des Grundkörpers (19) des Mittelteils (10) an einen runden Querschnitt der Arme (30; 70) anzupassen.

3. Luftfederträger (1; 2) nach Anspruch 1 oder 2, **dadurch gekennzeichnet, dass** das Mittelteil (10) für jeden der Arme (30; 70) eine zum Armquerschnitt formangepasste Kontaktfläche (21) aufweist, an der das Mittelteil (10) mit dem Arm (30; 70) vollflächig verschweißt ist.

4. Luftfederträger (1; 2) nach einem der vorhergehenden Ansprüche, **dadurch gekennzeichnet,**
(a) **dass** die Arme (30; 70) am Mittelteil (10) durch Reibschweißen oder Magnet-Arc-Schweißen befestigt sind; und/oder
(b) **dass** das Mittelteil (10) und/oder die Arme (30; 70) zumindest abschnittsweise aus einem Aluminium-, Graphit- oder Graphitverbundwerkstoff gebildet sind.

5. Luftfederträger (1; 2) nach einem der vorhergehenden Ansprüche, **dadurch gekennzeichnet,**
(a) **dass** die erste Befestigungseinrichtung (14, 15, 17) zur Abstützung der Achse (4) zwei zueinander höhenversetzte, schräge Stützflächen (14, 15) aufweist; und
(b) **dass** die Stützflächen (14, 15) in einer Richtung (y), die im an der Achse montierten Zustand des Luftfederträgers (1; 2) der Längsachse des Fahrzeugs entspricht, versetzt angeordnet sind.

6. Luftfederträger nach einem der vorhergehenden Ansprüchen, **dadurch gekennzeichnet,**
(a) **dass** das Blechbiegeteil (32) ein nach oben hin offenes, aus zwei parallel verlaufenden Kanten (33) gebildetes Profil aufweist; und/oder
(b) **dass** das Blechbiegeteil (32) einen aus zwei geraden Teilabschnitten (35, 36) gebildeten, geknickten Verlauf aufweist, derart, dass der Verbindungsbereich (37) der beiden Teilabschnitte (35, 36) weiter außen als der Rohrendabschnitt (41) des ersten Abschnitts (31) liegt, wobei die dritte Befestigungseinrichtung (34) zur Halterung der Luftfeder am Verbindungsbereich (37) der beiden Teilabschnitte (35, 36) angeordnet ist.

7. Luftfederträger nach einem der vorhergehenden Ansprüchen, **dadurch gekennzeichnet,**
(a) **dass** sich das Blechbiegeteil (32) zu seinem nicht am ersten Abschnitt (31) befestigten Ende hin verjüngt; und/oder
(b) **dass** zur Ausbildung der dritten Befestigungsvorrichtung ein Buchse (34) zur Verschraubung der Luftfedern in einem mittleren Bereich in das Blechbiegeteil (32) eingearbeitet ist; und/oder
(c) **dass** an einem Endabschnitt des Blechbiegeteils eine Stützfläche (38) mit einer Durchgangsbohrung (39) vorgesehen ist.

8. Luftfederträger (1; 2) nach einem der vorhergehenden Ansprüche, **dadurch gekennzeichnet, dass** das Mittelteil (10) an einer Seite des Mittelteils (10), die im an der Achse montierten Zustand des Luftfederträgers (1; 2) einer Fahrzeuginnenseite zugewandt ist, eine Ausnehmung (22) aufweist.

9. Nutzfahrzeug, vorzugsweise Omnibus, mit einem Luftfederträger (1; 2) nach einem der Ansprüche bis 8.

10. Nutzfahrzeug nach Anspruch 9, mit einem an einer Starrachse des Nutzfahrzeugs befestigten Luftfederträger (1; 2) nach einem der vorhergehenden Ansprüche, wobei die Starrachse des Nutzfahrzeugs gegenüber einer Querachse des Fahrzeugs um einen Winkel, der im Bereich von 2° bis 5° liegt, gedreht eingebaut ist und wobei die beiden zueinander höhenversetzten Stützflächen (14, 15) so ausgebildet sind, dass sie die Verdrehstellung der Achse kompensieren, derart, dass die Arme (30; 70) des Luftfederträgers (1; 2) im montierten Zustand in einer Horizontalebene liegen.

## Claims

1. An air spring support (1; 2) for an air-sprung axle (4) of a commercial vehicle, comprising a middle part (10), having a first fastening device (14, 15, 17) for the axle-side attachment of the air spring support (1; 2) and a second fastening device (11, 12, 13) for the attachment of a trailing arm (7); and
two arms (30; 70) which are joined in each case fixedly to the middle part (10) on opposite sides of the middle part (10) and in each case have a third fastening device (34; 74) for securing an air spring (8); the air spring support (1; 2) being of elongate U-shape, the arms (30; 70) in each case having a tubular first section (31; 71) which is joined to the middle part and extends substantially in the longitudinal direction (y) of the vehicle in the state of the air spring support, in which it is mounted on the axle (4), and a second section (32; 72) which adjoins the first section (31; 71) and extends substantially in the transverse direction (x) of the vehicle in the state of the air spring support (1; 2), in which it is mounted on the axle (4);
**characterized in that** the second section is configured as a sheet-metal bent part (32) which engages around a tube end section (41) of the first section (31) by means of an end section (42) of the sheet-metal bent part (32), which end section (42) has, to this end, two circular recesses (40) which are adapted to a diameter of the tube end section (41), and is welded to the tube end section (41) along the circular recesses (40).

2. The air spring support according to Claim 1, **characterized by**
(a) a main body (19) of the middle part with a polygonal cross section, on which the first fastening device (14, 15, 17) and second fastening device (11, 12, 13) are arranged; and
(b) two outer regions (20) of the middle part (10) which taper in the direction of the arms (30; 70), to which the arms (30; 70) are joined, and which are configured to adapt the polygonal cross section of the main body (19) of the middle part (10) to a round cross section of the arms (30; 70).

3. The air spring support (1; 2) according to Claim 1 or 2, **characterized in that**, for each of the arms (30; 70), the middle part (10) has a contact face (21) which is dimensionally adapted to the arm cross section and at which the middle part (10) is welded over the entire area to the arm (30; 70).

4. The air spring support (1; 2) according to one of the preceding claims, **characterized**
(a) **in that** the arms (30; 70) are fastened to the middle part (10) by way of rotary friction welding or magnetic arc welding; and/or
(b) **in that** the middle part (10) and/or the arms (30; 70) are/is formed at least in sections from an aluminium material, graphite material or graphite composite material.

5. The air spring support (1; 2) according to one of the preceding claims, **characterized**
(a) **in that**, in order to support the axle (4), the first fastening device (14, 15, 17) has two oblique supporting faces (14, 15) which are offset vertically with respect to one another; and
(b) **in that** the supporting faces (14, 15) are arranged offset in a direction (y) which corresponds to the longitudinal axis of the vehicle in the state of the air spring support (1; 2), in which it is mounted on the axle.

6. The air spring support according to one of the preceding claims, **characterized**
(a) **in that** the sheet-metal bent part (32) has an upwardly open profile which is formed from two edges (33) which run in parallel; and/or
(b) **in that** the sheet-metal bent part (32) has a bent profile which is formed from two straight part sections (35, 36), in such a way that the connecting region (37) of the two part sections (35, 36) lies further to the outside than the tube end section (41) of the first section (31), the third fastening device (34) for securing the air spring being arranged at the connecting region (37) of the two part sections (35, 36).

7. The air spring support according to one of the preceding claims, **characterized**
(a) **in that** the sheet-metal bent part (32) tapers towards its end which is not fastened to the first section (31); and/or,
(b) in order to configure the third fastening apparatus, a socket (34) for screw-connecting the air springs in a middle region is machined into the sheet-metal bent part (32); and/or
(c) **in that** a supporting face (38) with a through hole (39) is provided on an end section of the sheet-metal bent part.

8. The air spring support (1; 2) according to one of the preceding claims, **characterized in that** the middle part (10) has a recess (22) on a side of the middle part (10) which faces a vehicle inner side in the state of the air spring support (1; 2), in which it is mounted on the axle.

9. A commercial vehicle, in particular omnibus, having an air spring support (1; 2) according to one of Claims 1 to 8.

10. The commercial vehicle according to Claim 9, having an air spring support (1; 2) according to one of the preceding claims which is fastened to a rigid axle of the commercial vehicle, the rigid axle of the commercial vehicle being installed in a manner which is skewed by an angle which lies in the range from 2° to 5° with respect to a transverse axis of the vehicle, and the two supporting faces (14, 15) which are offset vertically with respect to one another being configured in such a way that they compensate for the skewed position of the axle, in such a way that the arms (30; 70) of the air spring support (1; 2) lie in a horizontal plane in the mounted state.

## Revendications

1. Support de suspension pneumatique (1; 2) pour un essieu (4) à suspension pneumatique d'un véhicule utilitaire, comprenant
une partie médiane (10), présentant un premier dispositif de fixation (14, 15, 17) pour la liaison avec l'essieu du support de suspension pneumatique (1; 2) et un deuxième dispositif de fixation (11, 12, 13) pour la liaison d'un bras oscillant longitudinal (7); et
deux bras (30; 70), qui sont attachés de façon fixe à la partie médiane (10) respectivement sur des côtés opposés de la partie médiane (10) et qui présentent respectivement un troisième dispositif de fixation (34; 74) pour le maintien d'un amortisseur pneumatique (8); dans lequel le support de suspension pneumatique (1; 2) est en forme de U étiré, dans lequel les bras (30; 70) présentent respectivement une première partie tubulaire (31; 71), jointe à la partie médiane, qui lorsque le support de suspension pneumatique est monté sur l'essieu (4) s'étend essentiellement dans la direction longitudinale (y) du véhicule, et présentent une deuxième partie (32; 72) se raccordant à la première partie (31; 71), qui lorsque le support de suspension pneumatique (1; 2) est monté sur l'essieu (4) s'étend essentiellement dans la direction transversale (x) du véhicule;
**caractérisé en ce que** la deuxième partie est réalisée sous la forme d'une pièce pliée en tôle (32), qui entoure une partie d'extrémité tubulaire (41) de la première partie (31) au moyen d'une partie d'extrémité (42) de la pièce pliée en tôle (32), qui présente à cet effet deux évidements circulaires (40) adaptés à un diamètre de la partie d'extrémité tubulaire (41) et qui est soudée à la partie d'extrémité tubulaire (41) le long des évidements circulaires (40).

2. Support de suspension pneumatique selon la revendication 1, **caractérisé par**
(a) un corps de base (19) de la partie médiane avec une section transversale polygonale, sur lequel le premier dispositif de fixation (14, 15, 17) et le deuxième dispositif de fixation (11, 12, 13) sont disposés; et
(b) deux régions extérieures (20) de la partie médiane (10) s'amincissant en direction des bras (30; 70), auxquelles les bras (30; 70) sont joints et qui sont réalisées de façon à adapter la section transversale polygonale du corps de base (19) de la partie médiane (10) à une section transversale ronde des bras (30; 70).

3. Support de suspension pneumatique (1; 2) selon la revendication 1 ou 2, **caractérisé en ce que** la partie médiane (10) présente pour chacun des bras (30; 70) une face de contact (21) de forme adaptée à la section transversale des bras, sur laquelle la partie médiane (10) est soudée sur toute la surface au bras (30; 70).

4. Support de suspension pneumatique (1; 2) selon l'une quelconque des revendications précédentes, **caractérisé en ce que**
(a) les bras (30; 70) sont fixés à la partie médiane (10) par soudage par friction ou par soudage à l'arc magnétique; et/ou
(b) la partie médiane (10) et/ou les bras (30; 70) sont formés au moins en partie d'un matériau d'aluminium, de graphite ou d'un matériau composite de graphite.

5. Support de suspension pneumatique (1; 2) selon l'une quelconque des revendications précédentes, **caractérisé en ce que**
(a) le premier dispositif de fixation (14, 15, 17) présente pour soutenir l'essieu (4) deux faces d'appui obliques (14, 15) décalées en hauteur l'une par rapport à l'autre; et
(b) les faces d'appui (14, 15) sont disposées avec un décalage dans une direction (y), qui correspond à l'axe longitudinal du véhicule lorsque le support de suspension pneumatique (1; 2) est monté sur l'essieu.

6. Support de suspension pneumatique selon l'une quelconque des revendications précédentes, **caractérisé en ce que**
(a) la pièce pliée en tôle (32) présente un profil ouvert vers le haut formé par deux côtés (33) s'étendant parallèlement; et/ou
(b) la pièce pliée en tôle (32) présente un tracé coudé formé de deux segments partiels droits (35, 36), de telle manière que la zone de liaison (37) des deux segments partiels (35, 36) soit située plus loin à l'extérieur que la partie d'extrémité tubulaire (41) de la première partie (31), dans lequel le troisième dispositif de fixation (34) est disposé de façon à maintenir l'amortisseur pneumatique sur la zone de liaison (37) des deux segments partiels (35, 36).

7. Support de suspension pneumatique selon l'une quelconque des revendications précédentes, **caractérisé en ce que**
(a) la pièce pliée en tôle (32) s'amincit en direction de son extrémité non fixée à la première partie (31) ; et/ou
(b) pour la formation du troisième dispositif de fixation, une douille (34) pour le vissage des amortisseurs pneumatiques est formée dans une région centrale dans la partie pliée en tôle (32); et/ou
(c) il est prévu sur une partie d'extrémité de la pièce pliée en tôle une face d'appui (38) pourvue d'un trou de passage (39).

8. Support de suspension pneumatique (1; 2) selon l'une quelconque des revendications précédentes, **caractérisé en ce que** la partie médiane (10) présente un évidement (22) sur un côté de la partie médiane (10), qui est tourné vers un côté intérieur du véhicule lorsque le support de suspension pneumatique (1; 2) est monté sur l'essieu.

9. Véhicule utilitaire, de préférence autobus, muni d'un support de suspension pneumatique (1; 2) selon l'une quelconque des revendications 1 à 8.

10. Véhicule utilitaire selon la revendication 9, avec un support de suspension pneumatique (1; 2) selon l'une quelconque des revendications précédentes fixé sur un essieu rigide du véhicule utilitaire, dans lequel l'essieu rigide du véhicule utilitaire est monté en position tournée, par rapport à un axe transversal du véhicule, d'un angle qui se situe dans la plage de 2° à 5°, et dans lequel les deux faces d'appui (14, 15) décalées en hauteur l'une par rapport à l'autre sont formées de telle manière qu'elles compensent la position tournée de l'essieu, de telle manière que les bras (30; 70) du support de suspension pneumatique (1; 2) se situent à l'état monté dans un plan horizontal.
